# EUROPÄISCHE PATENTSCHRIFT

(11) **EP 3 628 455 B1**
(45) Veröffentlichungstag und Bekanntmachung des Hinweises auf die Patenterteilung: **27.03.2024**
(21) Anmeldenummer: 19197744.6
(22) Anmeldetag: 17.09.2019
(51) Int. Cl.: B25J 9/16

(54) **VERFAHREN ZUR ABSICHERUNG EINES MOBILEN LOGISTIK-ROBOTERS DURCH SZENERIEABGLEICH MIT EINEM REFERENZSZENARIO**
METHOD FOR SECURING A MOBILE LOGISTICS ROBOT BY COMPARISON WITH A REFERENCE SCENARIO
PROCÉDÉ DE PROTECTION D'UN ROBOT LOGISTIQUE MOBILE PAR COMPARAISON DES SCÈNES AVEC UN SCÉNARIO DE RÉFÉRENCE

(30) Priorität: 28.09.2018 DE 102018007722; 18.10.2018 DE 102018125934
(43) Veröffentlichungstag der Anmeldung: 01.04.2020
(73) Patentinhaber: STILL GmbH, 22113 Hamburg (DE)
(72) Erfinder: Schüthe, Dennis, 21255 Tostedt (DE); Bengt, Abel, 21335 Lüneburg (DE); König, Ralf, 21365 Adendorf (DE)
(74) Vertreter: Patentship Patentanwaltgesellschaft

(56) Entgegenhaltungen:
- WO-A1-2016/014917
- DE-A1-102015 220 495
- DE-U1-202017 103 611
- US-B1- 9 630 320

## Beschreibung

Die Erfindung betrifft ein Verfahren zur Absicherung eines Arbeitsbereichs eines mobilen Logistik-Roboters in wechselnden Arbeitsumgebungen, wobei der Logistik-Roboter von einem Steuerungssystem gesteuert wird, und die aktuelle Arbeitsumgebung mittels eines Sensorsystems erfasst und von einem Sicherheitssystem überwacht wird, wobei das Steuerungssystem einen beabsichtigten Arbeitsbereich in einer neuen Arbeitsumgebung autonom definiert.

Roboter kommen vermehrt in der Industrie und in Logistikbetrieben zum Einsatz, um Abläufe in der industriellen Fertigung und bei logistischen Aufgaben, beispielsweise bei der Kommissionierung, zu automatisieren. Meist werden dabei Roboter mit Armmanipulatoren, insbesondere Roboterarmen, eingesetzt. Ein Beispiel hierfür sind so genannte Knickarmroboter.

Robotische Anwendungen von Armmanipulatoren werden in heutiger industrieller Automation in der Regel in separierten Arbeitsräumen betrieben, die in der Regel als sensorisch überwachte Sicherheitskäfige ausgebildet sind. Als aktuelle Weiterentwicklung finden sich im Stand der Technik erste kollaborative Roboterkonzepte, bei denen Menschen und Roboter in derselben Arbeitsumgebung arbeiten. Aus Sicherheitsgründen ist bei solchen Roboterkonzepten allerdings die Arbeitsgeschwindigkeit stark eingeschränkt. Die so genannte kollaborative Geschwindigkeit beträgt typischerweise maximal 250mm/s. Außerdem weisen solche Roboterkonzepte aufgrund der Notwendigkeit von sicherheitsrelevanter Kraft- und Momentensensorik sehr hohe Produktkosten auf. Darüber hinaus können häufig nur sehr geringe Nutzlasten (im unteren Kilogramm-Bereich) gehoben werden, so dass sich ein ungünstiges Nutzlast-zu-Eigenlast-Verhältnis einstellt.

Der überwiegende Teil der heutigen robotischen Lösungen lässt sich als stationäre robotische Lösung charakterisieren, da der Roboterarm entweder fest auf dem Boden verankert oder verfahrbar auf einer Linearachse montiert ist. Somit ergibt sich ein räumlich stark eingeschränkter Arbeitsraum, der üblicherweise durch einen Sicherheitszaun abgetrennt ist.

Es gibt erste mobile Ansätze mit Roboterarmen auf frei fahrbaren Plattformen. Beispiele hierfür sind flache autonom fahrende Fahrzeuge ("automated guided vehicles", AGVs) oder auch fahrerlose Flurförderzeuge, insbesondere mobile Kommissionierroboter. In der Regel sind diese Lösungen aber nicht im gemischten Betrieb ohne räumliche Separierung von menschlichen Bedienern einsetzbar.

Als Abwandlung von fest installierten Sicherheitszäunen finden sich erste Ansätze von virtuellen Schutzzäunen, bei denen mittels geeigneter Sensoren (z. B. Laserscanner) der freie Bereich um den Roboter herum überwacht wird. Bei Verletzung des durch den virtuellen Schutzzaun festgelegten Schutzfeldes wird der Roboter sicher begrenzt bzw. abgeschaltet.

Durch die räumliche Separierung von Roboter und Menschen entsteht eine hemmende Barriere für den Einsatz von kollaborativen Bedienkonzepten mit einer Mensch-Roboter-Kollaboration. Ein Mischbetrieb in parallel von Menschen und Robotern genutzten Bereichen ist auch bei mobilen robotischen Einheiten, die beispielsweise auf beweglichen Plattformen montiert sind, häufig nicht möglich. Konzepte mit anwendungsangepassten Kinematiken, bei denen die Gefahrenvermeidung durch die Formgebung des Roboter-Gehäuses realisiert wird, schränken den Gestaltungsspielraum der Kinematik stark ein.

Als Folge dieser Hemmnisse zeigen sich für die bekannten kollaborativen Roboterkonzepte, bedingt durch ihre Charakteristika, nur sehr eingeschränkte Einsatzfelder. Sie erzielen daher bislang nur eine extrem geringe Marktdurchdringung.

Besonders anspruchsvoll ist die Verwirklichung kollaborativer Konzepte bei Logistik-Robotern, insbesondere autonomen Flurförderzeugen mit Roboterarmen zur Lasthandhabung, z.B. mobilen Kommissionierrobotern, weil sich Logistik-Roboter frei in einem Logistikbereich, z.B. einer Lagerhalle, bewegen sollen. Dabei treffen sie ständig auf völlig neue Arbeitsumgebungen, die abgesichert werden müssen.

Die DE 20 2017 103 611 U1 offenbart ein Verfahren zur Absicherung einer Maschine, die als Fahrzeug ausgebildet sein kann und von einem Steuerungssystem gesteuert ist, wobei mit einem Objektsensor, der als Laserscanner oder als Kamera ausgebildet sein kann, die aktuelle Arbeitsumgebung mittels des Objektsensors erfasst und von einem Sicherheitssystem überwacht wird. Von dem Objektsensor werden gleichzeitig mehrere Segmente einer Fläche überwacht. Mit dem als Steuer- und Auswerteeinheit ausgebildeten Steuerungssystem werden die Signale des Objektsensors ausgewertet und Steuersignale, die Lenk- oder Bremssignale sein können, für die Maschine erzeugt. Mit dem Objektsensor wird ermittelt, ob die Segmente frei sind oder von einem Objekt belegt sind. Wird in einem Segment ein Objekt detektiert, berechnet die Steuer- und Auswerteeinheit eine Trajektorie der Maschine, welche diejenigen Segmente meidet, in denen Objekte detektiert wurden, und diejenigen Segmente wählt, in denen keine Objekte detektiert wurden. Die Maschine umfährt somit diejenigen Segmente, in denen mit dem Objektsensor Objekte detektiert wurden, d.h. die Maschine umfährt die Objekte. Falls keine das Objekt umfahrende Trajektorie möglich ist oder eine Interaktion mit dem Objekt erfolgen soll, hält die Maschine möglichst nahe an dem von dem Objekt belegten Segment an.

Die US 9 630 320 B1 offenbart einen mobilen Logistik-Roboter, der mit Sensoren, die als 2D oder 3D-Sensoren ausgeführt sein können, an einem mit einem Greifer versehenen Roboterarm und mit Navigationssensoren an einem Fahrgestell versehen ist, um die Umgebung zu erfassen und Gegenstände zu greifen sowie zu navigieren. Um die zu greifenden Gegenstände aus einem Stapel zu identifizieren, wird mit den Sensoren ein 3D-Model der Umgebung bestimmt, aus dem 3D-Model mindestens ein 2D Bild bestimmt, das 2D Bild segmentiert, um zu greifende Gegenstände zu identifizieren, 3D-Modelle der identifizierten Gegenstände bestimmt, und anschließend aus den 3D-Modellen der Gegenstände ein bestimmter Gegenstand ausgewählt, der mit dem Roboterarm und dem Greifer angefahren und gegriffen werden soll.

Der vorliegenden Erfindung liegt die Aufgabe zugrunde, ein Verfahren der eingangs genannten Art so auszugestalten, dass ein sicherer Betrieb eines mobilen, frei verfahrbaren Logistik-Roboters auch bei wechselnden Arbeitsumgebungen im Mischbetrieb mit Menschen ermöglicht wird.

Die Erfindung ist im Patentanspruch 1 definiert.

Diese Aufgabe wird erfindungsgemäß dadurch gelöst, dass in einem abgegrenzten Arbeitsbereich einer neuen Arbeitsumgebung das vorgefundene Szenario mit dem Sensorsystem des Sicherheitssystems erfasst und auf Veränderung überwacht wird, wobei von dem Sicherheitssystem mittels initial erfasster Sensorinformationen ein Referenzszenario des definierten Arbeitsbereichs als Schutzfeld definiert wird, aktuell erfasste Sensorinformationen mit dem Referenzszenario abgeglichen werden, und bei Veränderungen gegenüber dem Referenzszenario eine Schutzfeldverletzung festgestellt wird, und bei einer Schutzfeldverletzung der Logistik-Roboter automatisch in einen sicheren Zustand versetzt wird.

Der Grundgedanke der Erfindung besteht also darin, dass in einem abgegrenzten Arbeitsbereich einer neuen Arbeitsumgebung das vorgefundene Szenario mit dem Sensorsystem des Sicherheitssystems erfasst und auf Veränderung überwacht wird. Die initial erfassten Sensorinformationen definieren dabei das Referenzszenario, mit dem die aktuell erfassten Sensorinformationen abgeglichen werden. Ergeben sich Veränderungen zum Referenzszenario wird dieses als Verletzung des Schutzfeldes interpretiert.

Das erfindungsgemäße Verfahren friert somit das Szenario auf Basis der Sensorinformationen quasi als Schutzfeld ein. Dabei ist das relevante Kriterium für eine Schutzfeldverletzung die Veränderung des Szenarios. Bewegt sich beispielsweise ein Rollregal innerhalb des definierten Arbeitsbereichs, so verändert sich das Szenario gegenüber dem Referenzszenario, wodurch eine Verletzung des Schutzfeldes ausgelöst wird.

Vorzugsweise scannt mindestens ein als Scanner ausgebildeter Sensor des Sensorsystems den definierten Arbeitsbereich. Dabei wird als Scanner zweckmäßigerweise ein Laserscanner verwendet.

Gemäß einer besonders bevorzugten Ausgestaltung der Erfindung nimmt mindestens ein als Kamera ausgebildeter Sensor des Sensorsystems initial ein Referenzbild des definierten Arbeitsbereichs als Referenzszenario auf und werden aktuell aufgenommene Bilder mit dem Referenzbild abgeglichen.

Ein bevorzugter Anwendungsfall der Erfindung sieht vor, dass als Logistik-Roboter ein mobiles, frei verfahrbares robotisches Fahrzeug, insbesondere ein autonomes Flurförderzeug, mit mindestens einem Roboterarm zur Lasthandhabung in einer wechselnden Arbeitsumgebung verwendet wird.

Besonders bevorzugt wird als Logistik-Roboter ein mobiler Kommissionierroboter verwendet.

Die Erfindung bietet eine ganze Reihe von Vorteilen:
Es können Arbeitsfelder ohne feste Schutzfeldabtrennung erschlossen werden.

Außerdem kann die Arbeitsgeschwindigkeit erhöht werden, da der Roboter mit "nichtkollaborativer" Geschwindigkeit bewegt werden kann. Darüber hinaus können erhöhte Nutzlasten gehandhabt werden, da keine permanente Kraft- und Momentenüberwachung des Roboters notwendig ist und somit größere Nutzlasten mit erhöhter Geschwindigkeit bewegt werden können, die oberhalb der Überwachungsgrenzen liegen. Auch die Kosten für die Sensorik können reduziert werden, da keine Kollisionsüberwachung durch robotermontierte Sensorik notwendig ist. Schließlich können ebenso die Kosten für den Roboterarm verringert werden, da Standard-Industrieroboter anstelle kostenintensiver kollaborativer Roboter eingesetzt werden können. Es wird eine Lasthandhabung in "nicht-freie" Bereiche, beispielsweise Ladungshilfseinrichtungen, ermöglicht, beispielsweise ortsfeste Regale ohne Bodenverankerung, mobile Bereitstellungssysteme wie Sequenzwagen, ortsveränderliche Regale, wie Rollregale, Schieberegale oder Rollwagen.

Weitere Vorteile und Einzelheiten der Erfindung werden anhand des in der schematischen Figur dargestellten Ausführungsbeispiels näher erläutert.

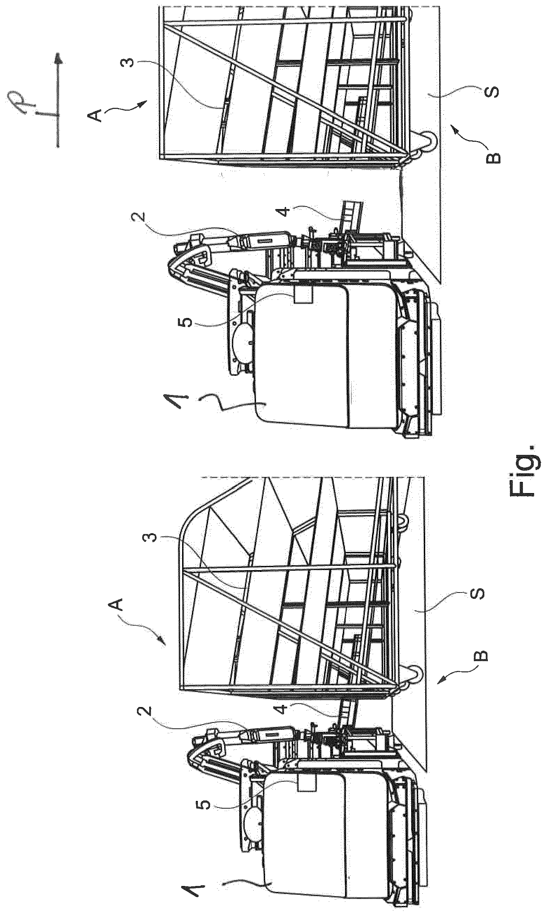

In der Figur ist ein beispielsweise als mobiler Kommissionierroboter 1 ausgebildeter mobiler, frei verfahrbarer Logistik-Roboter 1 mit einem Roboterarm 2 gezeigt. Mittels des Roboterarms 2 wird ein Rollregal bzw. ein Schieberegal 3 mit Waren 4 bestückt. Um einen sicheren Betrieb des Logistik-Roboters 1 zu gewährleisten, scannt ein Sensor eines Sensorsystems 5 des Logistik-Roboters 1 die Arbeitsumgebung A und definiert den beabsichtigten, sicheren Arbeitsbereich B. Dabei kann der sichere Arbeitsbereich B als Polygon definiert werden.

Ein im vorliegenden Ausführungsbeispiel als Kamera ausgebildeter Sensor des Sensorsystems 5 nimmt initial ein Referenzbild (Referenzszenario) des definierten Arbeitsbereichs B auf. Dieses Referenzbild wird vom Sicherheitssystem des Logistik-Roboters 1 als Referenzszenario eines Schutzfeldes S definiert. Aktuell von der Kamera des Sensorsystems 5 erfasste Bilder werden mit dem Referenzbild abgeglichen.

Auf der linken Seite der Figur ist die Situation dargestellt, wie in einer aktuellen Arbeitsumgebung A das initiale Referenzbild aufgenommen und das Schutzfeld S eingeschaltet wird.

Auf der rechten Seite der Figur ist eine Situation dargestellt, in der das Rollregal bzw. das Schieberegal 3 verschoben wurde. Das Schieberegal 3 wurde im dargestellten Ausführungsbeispiel nach in der Figur rechts verschoben, wie durch den Pfeil P verdeutlicht ist, so dass sich der seitliche Abstand zwischen Schieberegal 3 und Flurförderzeug 1 im Vergleich zur linken Seite der Figur vergrößert hat. Die Kamera des Sensorsystems 5 nimmt in dieser aktuellen Situation also ein Bild auf, das gegenüber dem auf der linken Seite der Figur gezeigten Referenzbild verändert ist. Diese Veränderung wird vom Sicherheitssystem als Verletzung des Schutzfeldes S interpretiert, woraufhin der Logistik-Roboter 1 automatisch in einen sicheren Zustand versetzt wird.

Anstelle der Erfassung des Referenzszenarios mit einer Kamera und Abgleich aktueller Kamerabilder mit dem Referenzbild kann das Referenzszenario auch mit einem Sensor des Sensorsystems 5, beispielsweise einem Laserscanner, erfasst werden und aktuell erfasste Sensorinformationen des Sensors mit dem Referenzszenario abgeglichen werden.

## Patentansprüche

1. Verfahren zur Absicherung eines Arbeitsbereichs (B) eines mobilen Logistik-Roboters (1) in wechselnden Arbeitsumgebungen (A), wobei der Logistik-Roboter (1) von einem Steuerungssystem gesteuert wird, und die aktuelle Arbeitsumgebung (A) mittels eines Sensorsystems (5) erfasst und von einem Sicherheitssystem überwacht wird, wobei das Steuerungssystem einen beabsichtigten Arbeitsbereich (B) in einer neuen Arbeitsumgebung (A) autonom definiert, **dadurch gekennzeichnet, dass** in dem abgegrenzten Arbeitsbereich (B) der neuen Arbeitsumgebung das vorgefundene Szenario mit dem Sensorsystem (5) des Sicherheitssystems erfasst und auf Veränderung überwacht wird, wobei von dem Sicherheitssystem mittels initial erfasster Sensorinformationen ein Referenzszenario des definierten Arbeitsbereichs (B) als Schutzfeld (S) definiert wird, aktuell erfasste Sensorinformationen mit dem Referenzszenario abgeglichen werden, und bei Veränderungen gegenüber dem Referenzszenario eine Schutzfeldverletzung festgestellt wird, und bei einer Schutzfeldverletzung der Logistik-Roboter (1) automatisch in einen sicheren Zustand versetzt wird.

2. Verfahren nach Anspruch 1, **dadurch gekennzeichnet, dass** mindestens ein Sensor des Sensorsystems (5) ausgebildet ist, den definierten Arbeitsbereich zu scannen.

3. Verfahren nach Anspruch 2, **dadurch gekennzeichnet, dass** als Scanner ein Laserscanner verwendet wird.

4. Verfahren nach Anspruch 1, **dadurch gekennzeichnet, dass** mindestens ein Sensor des Sensorsystems (5) ausgebildet ist, initial ein Referenzbild des definierten Arbeitsbereichs (B) als Referenzszenario aufzunehmen und aktuell aufgenommene Bilder mit dem Referenzbild abgeglichen werden.

5. Verfahren nach einem der Ansprüche 1 bis 4, **dadurch gekennzeichnet, dass** als Logistik-Roboter (1) ein mobiles robotisches Fahrzeug, insbesondere ein autonomes Flurförderzeug, mit mindestens einem Roboterarm (2) zur Lasthandhabung in einer wechselnden Arbeitsumgebung (A) verwendet wird.

6. Verfahren nach Anspruch 5, **dadurch gekennzeichnet, dass** als Logistik-Roboter (1) ein mobiler Kommissionierroboter (1) verwendet wird.

## Claims

1. Method for securing a work region (B) of a mobile logistics robot (1) in changing work environments (A), wherein the logistics robot (1) is controlled by a control system, and the current work environment (A) is captured by means of a sensor system (5) and monitored by a safety system, wherein the control system autonomously defines an intended work region (B) in a new work environment (A), **characterized in that** the existing scenario in the delimited work region (B) of the new work environment is captured with the sensor system (5) of the safety system and monitored for change, wherein a reference scenario of the defined work region (B) is defined as a field of protection (S) by the safety system by means of initially captured sensor information, currently captured sensor information is compared to the reference scenario, and a violation of the field of protection is determined if there are changes compared to the reference scenario, and the logistics robot (1) is automatically placed in a safe state in the case of a violation of the field of protection.

2. Method according to Claim 1, **characterized in that** at least one sensor of the sensor system (5) is configured to scan the defined work region.

3. Method according to Claim 2, **characterized in that** a laser scanner is used as the scanner.

4. Method according to Claim 1, **characterized in that** at least one sensor of the sensor system (5) is configured to initially record a reference image of the defined work region (B) as the reference scenario and currently recorded images are compared with the reference image.

5. Method according to any of Claims 1 to 4, **characterized in that** the logistics robot (1) used is a mobile robotic vehicle, in particular an autonomous industrial truck, having at least one robot arm (2) for handling loads in a changing work environment (A).

6. Method according to Claim 5, **characterized in that** the logistics robot (1) used is a mobile commissioning robot (1).

## Revendications

1. Procédé permettant de sécuriser une zone de travail (B) d'un robot logistique mobile (1) dans des environnements de travail (A) variables, dans lequel le robot logistique (1) est commandé par un système de commande, et l'environnement de travail (A) actuel est détecté au moyen d'un système de capteur (5) et est surveillé par un système de surveillance, dans lequel le système de commande définit de manière autonome une zone de travail (B) prévue dans un nouvel environnement de travail (A),
**caractérisé en ce que** dans la zone de travail (B) délimitée du nouvel environnement de travail, le scénario rencontré est détecté par le système de capteur (5) du système de sécurité et est surveillé quant à une variation, dans lequel, au moyen d'informations de capteur détectées initialement, le système de sécurité définit un scénario de référence de la zone de travail (B) définie comme un champ de protection (S), des informations de capteur actuellement détectées sont comparées avec le scénario de référence, et en cas de variations par rapport au scénario de référence, une violation de champ de protection est constatée, et en cas de violation de champ de protection, le robot logistique (1) est remis automatiquement dans un état sûr.

2. Procédé selon la revendication 1, **caractérisé en ce qu'**au moins un capteur du système de capteur (5) est réalisé pour scanner la zone de travail définie.

3. Procédé selon la revendication 2, **caractérisé en ce qu'**un scanner laser est utilisé en tant que scanner.

4. Procédé selon la revendication 1, **caractérisé en ce qu'**au moins un capteur du système de capteur (5) est réalisé pour enregistrer initialement une image de référence de la zone de travail (B) définie comme scénario de référence, et des images enregistrées actuellement sont comparées avec l'image de référence.

5. Procédé selon l'une quelconque des revendications 1 à 4, **caractérisé en ce que** comme robot logistique (1) un véhicule robotisé mobile est utilisé, en particulier un chariot de manutention autonome comprenant au moins un bras de robot (2) pour la manutention de charges dans un environnement de travail (A) variable.

6. Procédé selon la revendication 5, **caractérisé en ce qu'**un robot mobile de préparation de commande (1) est utilisé comme robot logistique (1).
